# EUROPÄISCHE PATENTANMELDUNG

(11) **EP 4 071 375 A1**
(43) Veröffentlichungstag der Anmeldung: **12.10.2022**
(21) Anmeldenummer: 21167230.8
(22) Anmeldetag: 07.04.2021
(51) Int. Cl.: F16D 1/10, F16D 3/26

(54) **MESSEINRICHTUNG ZUR ERFASSUNG EINES BETRIEBSPARAMETERS EINER LANDWIRTSCHAFTLICHEN GELENKWELLE**

(71) Anmelder: Off-Highway Powertrain Services Germany GmbH, 53797 Lohmar (DE)
(72) Erfinder: HOUSE, Nolan, Clarendon Hills, IL 60514 (US); KRÜGER, Max, 53797 Lohmar (DE); JUNG, Thomas, 53177 Bonn (DE)
(74) Vertreter: Grünecker Patent- und Rechtsanwälte PartG mbB

(57) **Zusammenfassung**

Die vorliegende Erfindung betrifft eine Messeinrichtung (44) mit einem Magnetfeldsensor (48) zur Erfassung von zumindest einem Betriebsparameter einer landwirtschaftlichen Gelenkwelle (1) zur Drehmomentvermittlung zwischen einer Zapfwelle eines Zugfahrzeuges und einem Getriebe eines landwirtschaftlichen Geräts, die zumindest ein Zapfenkreuz (13, 14), an dessen gegenüberliegende Zapfen ein Wellenkörper (4) angeschlossen ist, und ein den Wellenkörper (4) drehbar in sich aufnehmendes Schutzrohr (7) aufweist, wobei der Magnetfeldsensor (48) zur Messung eines von dem bloßen Wellenkörper (4) der Gelenkwelle (1) ausgehenden Magnetfelds angepasst ausgebildet ist.

## Beschreibung

Die vorliegende Erfindung betrifft eine Messeinrichtung zur Erfassung eines Betriebsparameters einer landwirtschaftlichen Gelenkwelle.

Landwirtschaftliche Gelenkwellen werden zur Drehmomentvermittlung zwischen einer Zapfwelle eines Zugfahrzeuges und einem Getriebe eines landwirtschaftlichen Geräts eingesetzt und weisen zum Schutz einer Bedienperson einen Gelenkwellenschutz mit einem Schutzrohr aus Kunststoff auf, das einen Wellenkörper der Gelenkwelle umgibt und mit einer Kette gegen eine Drehung gesichert wird.

Eine solche landwirtschaftliche Gelenkwelle ist beispielsweise aus EP 3 719 336 A1 oder WO 2020/222210 A1 bekannt.

Die aus WO 2020/222210 A1 bekannte Gelenkwelle weist eine Messeinrichtung zur Erfassung eines Betriebsparameters der Gelenkwelle auf. Die Messeinrichtung umfasst mehrere über die Gelenkwelle verteilte Sensoren, deren Signale mittels Antennen von einer an dem Wellenkörper befestigten Neben-Elektronikeinheit zu einer an dem Schutzrohr befestigten Haupt-Elektronikeinheit gesendet werden. Die Messeinrichtung kann einen Hall-Sensor umfassen, der eine Drehung von an dem Wellenkörper der Gelenkwelle befestigter Magnete zur Erfassung einer Drehzahl registriert.

Die WO 2020/222210 A1 bietet Raum zu Verbesserungen.

Der vorliegenden Erfindung liegt die Aufgabe zugrunde, eine einfachere Messeinrichtung zur Erfassung eines Betriebsparameters einer landwirtschaftlichen Gelenkwelle anzugeben. Insbesondere nimmt die vorliegende Erfindung dabei auch die Verringerung des Montageaufwands zur Befestigung der Messeinrichtung an der Gelenkwelle in den Blick und will das einfache Nachrüsten einer Gelenkwelle mit einer Messeinrichtung ermöglichen.

Zur Lösung dieser Aufgabe gibt die vorliegende Erfindung eine Messeinrichtung zur Erfassung von zumindest einem Betriebsparameter einer landwirtschaftlichen Gelenkwelle mit den Merkmalen von Anspruch 1 an.

Die landwirtschaftliche Gelenkwelle ist zur Drehmomentvermittlung zwischen einer Zapfwelle eines Zugfahrzeuges und einem Getriebe eines landwirtschaftlichen Geräts einsetzbar. Sie weist zumindest ein Zapfenkreuz, an dessen gegenüberliegende Zapfen ein Wellenkörper angeschlossen ist, und ein den Wellenkörper drehbar in sich aufnehmendes Schutzrohr auf. Das Schutzrohr ist üblicherweise aus ammoniakbeständigem Kunststoff hergestellt. Die erfindungsgemäße Messeinrichtung umfasst einen Magnetfeldsensor, der zur Messung eines von dem bloßen Wellenkörper der Gelenkwelle ausgehenden Magnetfelds angepasst ausgebildet ist.

Der Wellenkörper der landwirtschaftlichen Gelenkwelle ist in der Regel längenverstellbar und nach Art einer Keilwelle bzw. -nabe ausgebildet. Üblicherweise weist der Wellenkörper ein Innenrohr und ein Außenrohr auf, wobei das Innenrohr in Längsrichtung verschiebbar in das Außenrohr aufgenommen ist. Um einen Verlust der Drehmomentvermittlung durch gegenseitiges Verdrehen von Innenrohr und Außenrohr zu verhindern, weicht der Querschnitt des Innenrohrs und des Außenrohrs von einer kreisrunden Form ab. Das Profil des Wellenkörpers ist insofern nicht rotationssymmetrisch im engeren Sinne. Häufig haben das Innenrohr und das Außenrohr ein sogenanntes Zitronen-Profil oder ein sogenanntes Stern-Profil. Herstellungsbedingt weist der Wellenkörper daher eine bestimmte magnetische Ausrichtung auf, sodass eine Rotation des Wellenkörpers zu einer Änderung des von dem bloßen Wellenkörper ausgehenden Magnetfelds führt. Als bloßer Wellenkörper ist in der Regel der unbestückte Wellenkörper zu verstehen, der sich aus dem nackten Innenrohr und dem nackten Außenrohr zusammensetzt, die in der Regel aus Stahl gefertigt sind. Jedenfalls ist der bloße Wellenkörper für gewöhnlich frei von magnetischen Zusatzbauteilen.
Die erfindungsgemäße Messeinrichtung ermöglicht so die Erfassung eines Betriebsparameters einer landwirtschaftlichen Gelenkwelle auf möglichst einfache Weise und mit möglichst wenig an der Gelenkwelle zu befestigenden Bauteilen. Die Herstellungskosten und der Montageaufwand werden dadurch verringert.

Nach einer bevorzugten Weiterbildung der vorliegenden Erfindung weist die Messeinrichtung ein geschlossenes Sensorgehäuse auf, das den Magnetfeldsensor und eine Energiequelle für den Magnetfeldsensor in sich aufnimmt und zur drehfesten Befestigung an einer Außen- oder einer Innenseite des Schutzrohrs angepasst ausgebildet ist. Das Sensorgehäuse ist vorzugsweise aus Kunststoff, beispielsweise aus PE oder ABS. Es ist kann aus demselben ammoniakbeständigen Material wie das Schutzrohr hergestellt sein. Das Schutzrohr und das Sensorgehäuse sind in der Regel aber separat hergestellte Bauteile. Das Sensorgehäuse kapselt den Magnetfeldsensor und die Energiequelle sowie ggf. weitere Sensoren in der Regel vollständig ein; d.h. es umgibt den Magnetfeldsensor und die Energiequelle in allen drei Raumrichtungen vollumfänglich. Dadurch bietet das Sensorgehäuse zuverlässigen Schutz vor äußeren Einflüssen wie Feuchtigkeit, Schmutz und Stößen durch z.B. Steinschlag. Die Energiequelle für den oder die Sensoren ist vorzugsweise eine Batterie. Das Sensorgehäuse ist jedenfalls bevorzugt frei von einer Durchführöffnung für Stromkabel oder anderen Kabeln.

Das Sensorgehäuse ist vorzugsweise zur drehfesten Befestigung an einer Außenumfangsfläche des Schutzrohrs angepasst ausgebildet. Es kann aber auch zur drehfesten Befestigung an einer Innenumfangsfläche des Schutzrohrs angepasst ausgebildet sein. Es kann auch zwei unterschiedliche Anlageflächen aufweisen, wobei die eine Anlagefläche zur drehfesten Befestigung an einer Außenumfangsfläche des Schutzrohrs und die andere zur drehfesten Befestigung an einer Innenumfangsfläche des Schutzrohrs angepasst ausgebildet sind. Die Messeinrichtung lässt sich dadurch einfach montieren. Landwirtschaftliche Gelenkwellen ohne Messeinrichtung können einfach nachgerüstet werden.

Nach einer weiteren bevorzugten Weiterbildung der vorliegenden Erfindung weist das Sensorgehäuse eine an das Schutzrohr anlegbare konkave Innenfläche auf, die aus gekrümmten und/oder geraden Flächenabschnitten gebildet ist. Die Richtungsangabe "innen" und "außen" wird hier und im Folgenden mit der Drehachse der Gelenkwelle als zentralem Referenzpunkt verwendet. Als Innenfläche des Sensorgehäuses ist insofern eine der Drehachse zugewandte Fläche zu verstehen, wohingegen eine Außenfläche des Sensorgehäuses als eine der Drehachse abgewandte Fläche zu verstehen ist. Die konkave Innenfläche bildet mindestens einen Flächenabschnitt als Anlagefläche zur Anlage an einen Außenumfang des Schutzrohrs aus, das im Wesentlichen rund ist. Die Innenfläche ist vorzugsweise so geformt, dass das Sensorgehäuse an Schutzrohre unterschiedlicher Größen anlegbar ist, wobei das kleineste Schutzrohr in einer Querschnittsansicht in der Regel im Zentrum der Innenfläche und das größte Schutzrohr an den äußeren Rändern der Innenfläche anliegt. Für gewöhnlich ist zumindest der zentrale Flächenabschnitt der Innenfläche gekrümmt; d.h. er entspricht in der Querschnittsansicht einem Kreisbogen mit einem festen Krümmungsradius. Der Krümmungsradius anderer gekrümmter Flächenabschnitte nimmt in der Regel ab, je weiter seitlich der Flächenabschnitt vom Zentrum aus angeordnet ist. Analog hierzu nimmt der Abstand gerader Flächenabschnitte zum Krümmungszentrum zu, je weiter seitlich der Flächenabschnitt vom Zentrum aus angeordnet ist. Ein gerader Flächenabschnitt entspricht in der Querschnittsansicht einer Geraden.

Durch die beschriebene Ausgestaltung der Innenfläche kann sich das Sensorgehäuse an Schutzrohre unterschiedlicher Größe anschmiegen. Die Geometrie des Sensorgehäuses ist bevorzugt universal kompatibel mit allen auf dem Markt üblichen Schutzrohren.

Weiter bevorzugt weist das Sensorgehäuse gegenüberliegend zu der Innenfläche eine konvexe Außenfläche auf, die aus gekrümmten und/oder geraden Flächenabschnitten gebildet ist. Die Außenfläche ist vorzugsweise so geformt, dass ein Schutztrichter für ein mit dem Zapfenkreuz gebildetes Gelenk über das Schutzgehäuse hinweg geschoben werden kann, wenn das Sensorgehäuse mit seiner Innenfläche an dem Außenumfang des Schutzrohres anliegt. Dadurch kann das Sensorgehäuse in der Nähe des Schutztrichters an der Gelenkwelle befestigt sein, ohne das Abschmieren des Gelenks zu beinträchtigen. Die Außenfläche kann zusätzlich oder alternativ zur Anlage an einen Innenumfang des Schutzrohrs angepasst ausgebildet sein.

Nach einer weiteren bevorzugten Weiterbildung der vorliegenden Erfindung ist das Sensorgehäuse auf einer eine Anlagefläche zur Anlage an das Schutzrohr ausbildenden Seite mit einem Positionierungszapfen versehen. Die Anlagefläche wird, sofern das Sensorgehäuse außen an dem Schutzrohr befestigt ist, von der Innenfläche des Sensorgehäuses ausgebildet, und, sofern das Sensorgehäuse innen an dem Schutzrohr befestigt ist, von der Außenfläche des Sensorgehäuses ausgebildet. Der Positionierungszapfen ist vorzugsweise im Zentrum der Innenfläche vorgesehen. Er kann in eine Bohrung im Schutzrohr eingreifen. Dadurch sichert der Positionierungszapfen eine Position des Sensorgehäuses auf dem Schutzrohr. Die Positionierung kann durch Befestigungsmittel fixiert werden. Hierfür kann das Sensorgehäuse beispielsweise einen Flansch mit einem Befestigungsloch für eine in das Schutzrohr einzuschraubende Schraube aufweisen und/oder durch Verkleben und/oder mittels eines Kabelbinders mit dem Schutzrohr verbunden werden. Es versteht sich, dass die Befestigung des Sensorgehäuses am Schutzrohr auch ohne Vorhandensein eines Positionierungszapfens am Sensorgehäuse erfolgen kann. Der Magnetfeldsensor kann in den Positionierungszapfen integriert sein, um die Signalstärke zu erhöhen.

Nach einer weiteren bevorzugten Weiterbildung der vorliegenden Erfindung ist zusätzlich zu dem Magnetfeldsensor mindestens ein weiterer Sensor, beispielsweise ein Beschleunigungssensor und/oder ein Temperatursensor, in dem Sensorgehäuse vorgesehen.

Nach einer weiteren bevorzugten Weiterbildung der vorliegenden Erfindung ist in dem Sensorgehäuse ein Prozessor vorgesehen, der ein Sensorsignal einer oder mehrerer der Sensoren zur Ermittlung von zumindest einem Betriebsparameter der Gelenkwelle, insbesondere der Drehzahl, verarbeitet. Vorzugsweise ist der Prozessor dazu eingerichtet, die Drehzahl aus den Signalen des Magnetfeldsensors zu ermitteln. Die Erfassung der Sensorsignale und die Verarbeitung der Sensorsignale erfolgen bei dieser bevorzugten Weiterbildung in derselben baulichen Einheit.

Nach einer weiteren bevorzugten Weiterbildung der vorliegenden Erfindung weist die Messeinrichtung einen Betriebsstundenzähler für die Gelenkwelle auf, der in Abhängigkeit von dem zumindest einen Betriebsparameter hochgesetzt wird. Die Betriebsstunden können beispielsweise aus der Dauer einer Rotation der Gelenkwelle abgeleitet werden, wobei die Rotation mit dem Magnetfeldsensor erfasst wird. Auch eine gemessene Beschleunigung und/oder eine Temperaturveränderung können als Indiz für eine Rotation der Gelenkwelle und damit für die Betriebsstunden verwendet werden. Die Temperaturmessung wird in der Regel auch zur Erfassung einer Fehlfunktion bzw. eines hohen Verschleißes herangezogen.

Landwirtschaftliche Gelenkwellen sind hochbelastete Bauteile, die zur Gewährleistung der maximalen Lebensdauer in regelmäßigen Abständen abgeschmiert werden müssen. Das optimale Intervall für die Schmierung der Lagerstellen eines Gelenkwellengelenks ist abhängig von dem verwendeten Lager, den Belastungen, den Umgebungsbedingungen und dem Einsatzzweck der Gelenkwelle. Der Gelenkwellenhersteller bestimmt für jeden Einsatzzweck ein optimales Schmierintervall. Der Bedienperson wird das Abschmieren im Rhythmus des optimalen Schmierintervalls vorgeschrieben. Insofern erleichtert der Betriebsstundenzähler für die Gelenkwelle der Bedienperson die Einhaltung dieser Vorschrift.

Nach einer weiteren bevorzugten Weiterbildung der vorliegenden Erfindung ist der Prozessor dazu angepasst ausgebildet, ein Sensorsignal zur Erfassung einer Bewegung einer mit der Gelenkwelle verbundenen Arbeitsmaschine auszuwerten und einen Betriebsstundenzähler für die Arbeitsmaschine in Abhängigkeit einer Dauer der erfassten Bewegung hochzusetzen. Die Bewegung der Arbeitsmaschine wird üblicherweise mit dem Beschleunigungssensor erfasst. Der Beschleunigungssensor erkennt in der Regel eine Vibration, die durch einen Betrieb der Arbeitsmaschine entsteht. Der Betriebsstundenzähler für die Arbeitsmaschine erleichtert die Abrechnung der tatsächlichen Arbeitsleistung für einen Lohnbetrieb.

Nach einer weiteren bevorzugten Weiterbildung der vorliegenden Erfindung ist in dem Sensorgehäuse eine datenmäßig mit dem Prozessor verbundene Sendeeinrichtung vorgesehen, die den oder die ermittelten Betriebsparameter und/oder einen Zählerstand des oder der Betriebsstundenzähler drahtlos an einen zur Datenverarbeitung angepassten Empfänger sendet. Der Empfänger kann beispielsweise in eine Konsole des Zugfahrzeuges integriert sein oder ein mobiles Endgerät des Fahrers des Zugfahrzeuges bzw. ein mobiles Endgerät der Bedienperson oder eines Instandhalters sein. Üblicherweise weist das mobile Endgerät, bspw. ein Smartphone oder ein Tablet, ein Display zum Anzeigen der Betriebsparameter und/oder der Betriebsstunden auf.

Weiter bevorzugt umfasst die Messeinrichtung ein Mittel zur Ausgabe eines Warn- oder Wartungssignals, das durch Erreichen eines vorbestimmten Zählerstandes eines Betriebsstundenzählers ausgelöst wird. Beispielsweise kann ein Lautsprecher in dem Sensorgehäuse vorgesehen sein, der einen lauten Piep-Ton erzeugt, wenn der vorbestimmte Zählerstand erreicht ist. Zusätzlich oder alternativ kann in eine Wandung des Sensorgehäuses ein von außen sichtbares Leuchtmittel, beispielsweise eine LED, integriert sein, die aufleuchtet, wenn der vorbestimmte Zählerstand erreicht ist. Auch der Empfänger kann Mittel zur Ausgabe eines Warnsignals aufweisen. Hierfür können beispielsweise das Display und/oder der Lautsprecher des mobilen Endgeräts genutzt werden. Die Ausgabe von Warn- oder Wartungssignalen erleichtert, die tatsächlichen Betriebsstunden der Komponenten zu überwachen und die Wartung zum richtigen Zeitpunkt durchzuführen. Kritische Situationen durch Überschreiten der Vorgaben können überwacht und durch rechtzeitige Alarmierung ein folgenschwerer Ausfall der Komponenten verhindert werden. Wird die entsprechende Wartung durchgeführt, kann der Alarm und der auslösende Zähler durch Aktivieren eines Triggers zurückgesetzt werden. Der Trigger kann beispielsweise durch Betätigen eines Druckknopfes am Sensorgehäuse oder durch drahtlose Datenkommunikation, z.B. über NFC oder Funk, aktiviert werden.

Nach einer weiteren bevorzugten Weiterbildung der vorliegenden Erfindung hat die Messeinrichtung einen Stand-by-Modus und einen Betriebsmodus, die als Steuerungslogik auf dem Prozessor implementiert sind, wobei der Prozessor so eingerichtet ist, dass in Reaktion auf ein Sensorsignal eines der Sensoren von dem Stand-by-Modus in den Betriebsmodus geschaltet wird. Im Stand-by-Modus hat die Messeinrichtung einen minimalen Stromverbrauch. Dadurch verlängert sich die Nutzungsdauer der Batterie. Der Prozessor ist im Stand-by-Modus im Wesentlichen ausgeschaltet. Er schaltet sich ein, wenn einer der Sensoren ein Signal generiert, das über eine vorgegebene Schwelle hinausgeht. Die Schwelle wird in der Regel durch Ermitteln eines Rauschens und/oder von anderen Störgrößen vorab bestimmt und auf dem Prozessor hinterlegt. Die Tätigkeit des Prozessors beschränkt sich im Stand-by-Modus vorzugsweise auf eine Hintergrundtätigkeit, nämlich darauf, ein empfangenes Sensorsignal mit der Schwelle zu vergleichen. Üblicherweise empfängt der Prozessor im Stand-by-Modus auch seltener Sensorsignale, indem diese nur in diskreten, vorzugsweise gleichbleibenden, Zeitabständen abgefragt werden. Durch Einschalten des Prozessors wird die Messeinrichtung von dem Stand-by-Modus in den Betriebsmodus geschaltet, in welchem die Sensorsignale kontinuierlich an den Prozessor gesendet und von diesem für die Erfassung eines Betriebs der Gelenkwelle und/oder des Arbeitsgeräts ausgewertet werden, um den bzw. die Betriebsstundenzähler hochzusetzen. Im Stand-by-Modus reicht es aus, wenn nur einer der Sensoren, beispielsweise der Beschleunigungssensor, aktiv ist. Der Beschleunigungssensor erfasst Beschleunigungssignale die durch eine Bewegung der Gelenkwelle und/oder des Arbeitsgeräts entstehen. Wird kein aktiver Betrieb der Gelenkwelle oder des Arbeitsgeräts mehr erkannt, versetzt sich die Messeinrichtung wieder in den Stand-by-Modus.

Das Umschalten von dem Stand-by-Modus in den Betriebsmodus kann für sich erfindungswesentlich sein. D.h. die Merkmale des Oberbegriffs von Anspruch 1, die Merkmale von Anspruch 7 und die Merkmale von Anspruch 12 können einen Gegenstand definieren, der für sich erfindungswesentlich sein kann. Dieser Gegenstand kann auch mit einem anderen Sensor zur Erfassung eines Betriebsparameters als einem Magnetfeldsensor erfindungswesentlich sein.

Bevorzugt ist in dem Sensorgehäuse ein dem Prozessor zugeordneter Datenspeicher angeordnet, der die Betriebsparameter und/oder die Betriebsstunden speichern kann. Im Betriebsmodus kann der Datenspeicher periodisch ausgelesen und die Daten von der Sendeeinrichtung an den Empfänger gesendet werden. Die Periodendauer bis zur jeweils nächsten Auslesung kann beispielsweise 10 Sekunden betragen.

In einem nebengeordneten Aspekt gibt die vorliegende Erfindung eine landwirtschaftliche Gelenkwelle zur Drehmomentvermittlung zwischen einer Zapfwelle eines Zugfahrzeuges und einem Getriebe eines landwirtschaftlichen Geräts an, die zumindest ein Zapfenkreuz, an dessen gegenüberliegende Zapfen ein Wellenkörper angeschlossen ist, ein den Wellenkörper drehbar in sich aufnehmendes Schutzrohr und eine drehfest an dem Schutzrohr befestigte erfindungsgemäße Messeinrichtung aufweist. Das Schutzrohr ist in der Regel wie eingangs beschrieben ausgestaltet, insbesondere aus einem ammoniakbeständigen Kunststoff hergestellt und mit einer Kette gegen ein Drehen gesichert. Auch das Schutzrohr ist üblicherweise längenverstellbar und setzt sich für gewöhnlich aus einem Innenrohr und einem Außenrohr zusammen, wobei das Innenrohr in Längsrichtung verschiebbar in das Außenrohr aufgenommen ist und das Innenrohr und das Außenrohr gegen ein gegenseitiges Verdrehen aufgrund ihres Querschnittsprofils oder anderer Sicherungsmittel gesichert sind. Das Sensorgehäuse ist vorzugsweise auf einem Außenumfang des Schutzrohrs befestigt. Die Art der Befestigung kann stoff-, form- und/oder kraftschlüssig sein.

Das Sensorgehäuse kann beispielsweise an das Schutzrohr angeschraubt, mit dem Schutzrohr verklebt, mittels eines Kabelbinders, eines O-Rings oder durch eine Presspassung mit dem Schutzrohr verbunden sein.

Weiter bevorzugt ist das Sensorgehäuse derart dimensioniert und/oder so an dem Schutzrohr befestigt, dass ein Schutztrichter für ein mit dem Zapfenkreuz gebildetes Gelenk der Gelenkwelle über das Sensorgehäuse hinweg auf das Schutzrohr gestülpt werden kann. Dadurch kann das Sensorgehäuse in der Nähe des Schutztrichters an der Gelenkwelle befestigt sein, ohne das Abschmieren des Gelenks zu beinträchtigen, bei dem der Schutztrichter in der Regel über die Welle geschoben wird.

Üblicherweise sind das Innenrohr und das Außenrohr des Wellenkörpers jeweils an ihrem freien Ende mit einem Gelenk verbunden. Jedes dieser Gelenke weist ein Zapfenkreuz mit zwei sich gegenüberliegenden Paaren von Zapfen auf, wobei das Innenrohr bzw. das Außenrohr des Wellenkörpers über eine Gabel an eines der zwei Paare angeschlossen ist. Das andere Zapfenpaar ist durch eine Gabel mit einem Wellenkörperstummel verbunden, der auf einen Zapfwellenstummel einer Zapfwelle aufgeschoben werden kann, wobei die Verbindung zwischen dem Gelenkwellenstummel und dem Zapfwellenstummel durch ein lösbares Befestigungsmittel, das üblicherweise mit einer an dem Zapfwellenstummel ausgebildeten umlaufenden Nut zusammenwirkt, gesichert wird.

In einem verfahrensmäßigen Aspekt gibt die vorliegende Erfindung ein Verfahren zur Erkennung eines Betriebs und/oder einer Betriebsdrehzahl einer landwirtschaftlichen Gelenkwelle durch Messung einer Magnetfeldänderung eines Magnetfelds, das von einem bloßen Wellenkörper der Gelenkwelle ausgeht, an. Wie eingangs erläutert nutzt das erfindungsgemäße Verfahren aus, dass der Wellenkörper herstellungsbedingt eine bestimmte magnetische Ausrichtung aufweist und eine Rotation des Wellenkörpers zu einer Änderung des von dem bloßen Wellenkörper ausgehenden Magnetfelds führt, die durch einen gegenüber dem Wellenkörper ortsfest und sich nicht mit dem Wellenkörper mitdrehend vorgesehenen Magnetfeldsensor gemessen wird. Der Magnetfeldsensor ist vorzugsweise an einem Außenumfang des Schutzrohres befestigt. Die Signale des Magnetfeldsensors werden von einem Prozessor ausgewertet, der in der Lage ist, die durch einen Betreib der Gelenkwelle erzeugten Signale von anderen Störgrößen zu unterscheiden bzw. diese voneinander zu trennen. Als Betrieb der Gelenkwelle können beispielsweise alle Signale gewertet werden, die einer Umdrehung von mindestens oder mehr als 10 Umdrehungen pro Minute entsprechen. Als Störgrößen können z.B. Erschütterungen und andere Bewegungen während einer Transportfahrt ohne tatsächlichen Betrieb der Gelenkwelle gelten. Die Störgrößen werden von dem Prozessor durch mathematische Signalverarbeitungsverfahren herausgefiltert. Die so erfassten Betriebszustände der Gelenkwelle werden in einem dem Prozessor zugeordneten Datenspeicher gespeichert. Zusätzlich oder alternativ können aus den Betriebszuständen die Betriebsstunden abgeleitet und gespeichert werden. Die gespeicherten Daten werden in der Regel drahtlos an einen von der Gelenkwelle ortsfernen Empfänger, beispielsweise an ein üblicherweise mobiles Endgerät der Bedienperson der Gelenkwelle bzw. des Fahrers des Zugfahrzeuges geschickt. Die drahtlose Kommunikationsschnittstelle zur Übertragung der Daten kann NFC oder Funk nutzen, beispielhaft seien an dieser Stelle Bluetooth, Wifi oder ähnliche Übertragungsprotokolle genannt.

In einem nebengeordneten verfahrensmäßigen Aspekt gibt die vorliegende Erfindung ein Verfahren zur Erkennung eines Betriebs einer an ein Nutzfahrzeug angekoppelten und durch eine landwirtschaftliche Gelenkwelle mit dem Nutzfahrzeug verbundene Arbeitsmaschine durch Auswerten eines Sensorsignals der Messeinrichtung an. Dabei wird in der Regel ein Beschleunigungssensor auf dem Schutzrohr montiert, der eine Bewegung oder eine Vibration erfasst, die durch einen Betrieb der Arbeitsmaschine entstehen. Die Signale des Beschleunigungssensors werden durch die Prozessoreinheit ausgewertet, die eventuelles Rauschen oder Störsignale aus den gemessen Signalen herausfiltert.

Nach einem Nebenaspekt der vorliegenden Erfindung kann die Messeinrichtung dazu angepasst ausgebildet sein, die Anwesenheit einer Anbaumaschine am Zugfahrzeug durch einen oder mehrere der Sensoren zu erkennen und die Anwesenheit bzw. den Zeitpunkt und/oder die Dauer der Anwesenheit auf dem Datenspeicher zu speichern. Durch Auslesen des Datenspeichers wird so eine Kontrollmöglichkeit für die Nutzungsdauer der Anbaumaschine geschaffen. Die auf dem Datenspeicher gespeicherten Daten sind vorzugsweise in eine Buchungssoftware einlesbar.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: eine Seitenansicht einer landwirtschaftlichen Gelenkwelle mit Blick in das Innere des Schutzrohrs durch Weglassen des Schutzrohrs in der Mitte der Figur,
- Fig. 2: Querschnittansicht einer Gelenkwelle nach einem ersten Ausführungsbeispiel,
- Fig. 3: Querschnittansicht einer Gelenkwelle nach einem zweiten Ausführungsbeispiel,
- Fig. 4A: Ausschnitt einer perspektivischen Seitenansicht der Gelenkwelle nach dem ersten Ausführungsbeispiel,
- Fig. 4B: vergrößerte Ansicht von Detail I aus Fig. 2,
- Fig. 5: Abbildung mit gemessener Beschleunigung und gemessenem Magnetfeld über die Zeit und
- Fig. 6: Schaubild mit Verfahrensablauf zur Betriebserkennung.

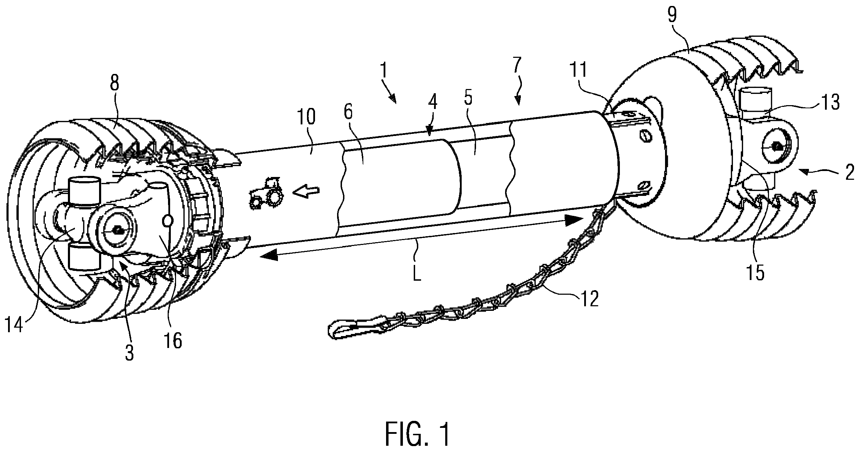

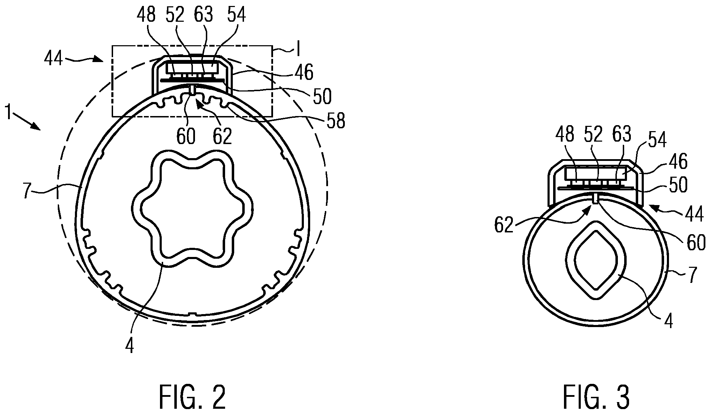

Die Figur 1 zeigt eine perspektivische Seitenansicht einer landwirtschaftlichen Gelenkwelle 1 mit einem ersten Gelenk 2 und einem zweiten Gelenk 3, die über einen längenverstellbaren Wellenkörper 4 miteinander verbunden sind. Der Wellenkörper 4 ist aus Stahl gefertigt und umfasst ein Innenrohr 5, das mit dem ersten Gelenk 2 verbunden ist, und ein Außenrohr 6, das mit dem zweiten Gelenk 3 verbunden ist. Das Innenrohr 5 ist in Längsrichtung L der Gelenkwelle 1 verschiebbar in das Außenrohr 6 aufgenommen. Um einen Verlust der Drehmomentvermittlung durch gegenseitiges Verdrehen von Innenrohr 5 und Außenrohr 6 zu verhindern, haben das Innenrohr 5 und das Außenrohr 6 einen von einer kreisrunden Form abweichenden Querschnitt. Vorliegend haben das Innenrohr 5 und das Außenrohr 6 ein sogenanntes Stern-Profil (siehe Fig. 2) oder ein Zitronen-Profil (siehe Fig. 3).

Zum Schutz einer Bedienperson weist die landwirtschaftliche Gelenkwelle 1 einen Gelenkwellenschutz auf, der ein den Wellenkörper 4 umgebendes Schutzrohr 7 und zwei die Gelenke 2, 3 abdeckende Schutztrichter 8, 9 umfasst. Der Gelenkwellenschutz besteht in der Regel aus ammoniakbeständigem Kunststoff. Das Schutzrohr 7 besteht aus einem äußeren Schutzrohr 10 und einem inneren Schutzrohr 11, wobei das innere Schutzrohr 11 in Längsrichtung L verschiebbar in das äußere Schutzrohr 10 aufgenommen ist. Zur Sicherung gegen ein Mitdrehen des Gelenkwellenschutzes ist an dem Gelenkwellenschutz eine Kette 12 vorgesehen, die an einem Zugfahrzeug oder einem Arbeitsgerät befestigt werden kann.
Die Gelenke 2, 3 sind jeweils als Kreuzgelenk mit einem Zapfenkreuz 13, 14 ausgestaltet, an dessen sich gegenüberliegende Zapfen eine Gabel 15, 16 angeschlossen ist. Die in Figur 1 freien gegenüberliegenden Zapfen des Zapfenkreuzes 13, 14 werden in der Regel über eine weitere (nicht dargestellte) Gabel mit einem Wellenkörperstummel verbunden, der zur Drehmomentvermittlung auf einen Zapfwellenstummel einer Zapfwelle oder einen Antriebszapfen eines Getriebes einer Arbeitsmaschine aufgeschoben werden kann.

Nach der vorliegenden Erfindung ist eine Messeinrichtung an der landwirtschaftlichen Gelenkwelle 1 befestigt. Der Wellenkörper kann ein Stern-Profil oder ein Zitronen-Profil haben. Es versteht sich von selbst, dass die Messeinrichtung nach der vorliegenden Erfindung auch an anderen landwirtschaftlichen Gelenkwellen befestigt werden kann und dass die genannten Wellenkörperprofile hier nur beispielhaft angegeben sind.

Die Figur 2 veranschaulicht in einer Querschnittansicht die Gelenkwelle 1, bei dem auf dem Schutzrohr 7 der landwirtschaftlichen Gelenkwelle 1 eine Messeinrichtung 44 zur Erfassung von zumindest einem Betriebsparameter der landwirtschaftlichen Gelenkwelle 1 befestigt ist. Die Messeinrichtung 44 umfasst ein geschlossenes Sensorgehäuse 46, das einen Magnetfeldsensor 48 umschließt, der auf einer Platine 50 mit einem Prozessor 52 vorgesehen ist. Die Platine 50 wird von einer Batterie 54 als Energiequelle mit elektrischer Energie versorgt, wobei die Batterie 54 ebenfalls in dem geschlossenen Sensorgehäuse 46 angeordnet ist. Das geschlossene Sensorgehäuse 46 besteht aus Kunststoff und kapselt die darin aufgenommenen Komponenten in allen drei Raumrichtungen ein. Der Magnetfeldsensor 48 ist zur Messung eines von dem bloßen Wellenkörper 4 der Gelenkwelle 1 ausgehenden Magnetfelds angepasst ausgebildet.

Der Wellenkörper 4 der Gelenkwelle 1 hat im Querschnitt ein Stern-Profil, wohingegen der Querschnitt des Schutzrohres 7 eierförmig ist. Das Schutzrohr 7 weist nach innen gerichtete Vorsprünge 58 auf, die ein Verdrehen zwischen dem inneren Schutzrohr 5 und dem äußeren Schutzrohr 6 verhindern. Das Sensorgehäuse 46 weist einen mittig an seiner Unterseite angeordneten Positionierungszapfen 60 auf, der in eine Bohrung 62 am Schutzrohr 7 eingreift und die Position des Sensorgehäuses 46 am Außenumfang des Schutzrohres 7 sichert. Die Bohrung 62 ist in Umfangsrichtung an der Stelle vorgesehen, an der der eierförmige Querschnitt seine Spitze hat.

Der durch gestrichelte Linien gebildete Kreis in Figur 2 stellt eine Bauraumgrenze für die Messeinrichtung 44 dar, die sich aus dem Innendurchmesser der Schutztrichter 8, 9 ableitet. Das Sensorgehäuse 46 passt zwischen den Außenumfang des Schutzrohres 7 an dessen Spitze und die Bauraumgrenze. Dadurch kann die Messeinrichtung 44 in der Nähe von einem der beiden Schutztrichter 8, 9 angeordnet werden, ohne ein Abschmieren der Gelenke 2, 3 zu beinträchtigen. Bei einem Abschmieren können die Schutztrichter 8, 9 über das Sensorgehäuse 46 hinweg in Richtung der axialen Mitte des Schutzrohres 7 geschoben werden. Die Schutztrichter 8, 9 können an ihrem engeren Ende eine Aussparung oder eine Klappe aufweisen, durch die das Sensorgehäuse 46 bei dem Darüberschieben des Schutztrichters 8, 9 hindurchpasst.

Der Prozessor 52 wertet die Signale des Magnetfeldsensors 48 zur Ermittlung von zumindest einem Betriebsparameter der Gelenkwelle 1 aus. Zu den Betriebsparametern zählen das Erkennen einer Rotation der Gelenkwelle 1 an sich und insbesondere die Drehzahl der Gelenkwelle 1. Die Drehzahl wird in der Regel dadurch ermittelt, dass die Gelenkwelle 1 bei einer Rotation periodische Maxima und Minima in den Messwerten des Magnetfeldsensors 48 erzeugt. Dadurch, dass die Geometrie des Wellenkörperprofils bekannt ist, kann aus der Periodendauer die Drehzahl ermittelt werden. Ein Beschleunigungssensor 63 ist ebenfalls in dem Sensorgehäuse 46 vorgesehen. Dessen Signale werden zur Ermittlung einer Bewegung eines mit dem Zugfahrzeug verbundenen Arbeitsgeräts verwendet. Rauschen und Störsignale der Sensoren werden von einer auf dem Prozessor 52 implementierten Logik herausgefiltert.

Des Weiteren sind in dem Sensorgehäuse 46 ein dem Prozessor 52 zugeordneter (nicht abgebildeter) Datenspeicher zum Speichern der Betriebsparameter und eine (nicht abgebildete) Sendeeinrichtung zum drahtlosen Versenden der auf dem Datenspeicher gespeicherten Daten vorgesehen. Aus den Signalen des Magnetfeldsensors 48 und des Beschleunigungssensors 63 leitet der Prozessor die Betriebsstunden der Gelenkwelle und die Betriebsstunden des Arbeitsgeräts ab, die mit Betriebsstundenzählem festgehalten werden, welche in der Logik des Prozessors 52 implementiert sind. Die Betriebsstunden werden als Betriebsparameter gespeichert und versendet.

Die Logik des Prozessors 52 beinhaltet die zuvor beschriebene Steuerung zum Umschalten zwischen dem Stand-by-Modus und dem Betriebsmodus. Als ausschlaggebendes Signal für ein Umschalten wird ein Signal des Beschleunigungssensors 63 verwendet, sofern es einen vorbestimmten Schwellenwert übersteigt. Das Sensorgehäuse 46 weist des Weiteren eine von außen sichtbare (nicht dargestellte) LED auf, die als Warnsignal rot aufleuchtet, sobald einer der Betriebsstundenzähler einen vorbestimmten Grenzwert übersteigt.

Die Figur 3 veranschaulicht ein zweites Ausführungsbeispiel, bei dem die zuvor beschriebene Messeinrichtung 44 auf dem Schutzrohr 7 der landwirtschaftlichen Gelenkwelle 1 zur Erfassung von zumindest einem Betriebsparameter der landwirtschaftlichen Gelenkwelle 1 befestigt ist und der Wellenkörper 4 der Gelenkwelle 1 im Querschnitt ein Zitronen-Profil hat, wohingegen der Querschnitt des Schutzrohres 7 rund ist. Die Erstreckung des Schutzrohrs 7 in radialer Richtung ist kleiner als die des Schutzrohres 7 des ersten Ausführungsbeispiels. Daher ist die Kontaktfläche an denen das Sensorgehäuse 46 an dem Schutzrohr anliegt bei dem zweiten Ausführungsbeispiel in der Querschnittsansicht weiter in der Mitte des Sensorgehäuses 46 als bei dem ersten Ausführungsbeispiel.

Die Messeinrichtung 44 ist bei beiden Ausführungsbeispielen dieselbe. Das Sensorgehäuse 46 ist dabei so ausgestaltet, dass es an unterschiedlich große Schutzrohre anlegbar ist.

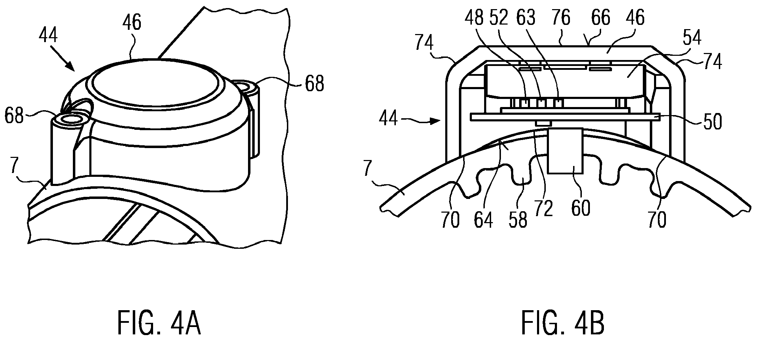

Die Figur 4A zeigt die Messeinrichtung 44 in vergrößerter Ansicht und Figur 4B veranschaulicht, dass das Sensorgehäuse 46 eine an den Außenumfang des Schutzrohrs 7 anlegbare konvexe Innenfläche 64 und eine der Innenfläche 64 gegenüberliegende konkave Außenfläche 66 hat. Gezeigt sind auch zwei seitlich von dem Sensorgehäuse 46 abragende Schraublaschen 68 mit einem Befestigungsloch für eine Schraube zum Festschrauben des Sensorgehäuses 46 am Schutzrohr 7.

Die Figur 4B zeigt das Detail I aus Fig. 2 in vergrößerter Darstellung und es wird ersichtlich, dass sich die konkave Innenfläche 64 aus zwei seitlichen geraden Flächenabschnitten 70, die sich schneiden würden, wenn man sie gedanklich verlängern würde, und einem gekrümmten mittigen Flächenabschnitt 72, der die beiden seitlichen geraden Flächenabschnitte 70 miteinander verbindet, zusammensetzt. Die konkave Außenfläche 66 umfasst ebenfalls zwei gerade Flächenabschnitte 74 auf, die sich schneiden würden, wenn man sie gedanklich verlängern würde. Allerdings ist der die geraden Flächenabschnitte 74 der Außenfläche 66 miteinander verbindende Flächenabschnitt auch als gerader Flächenabschnitt 76 ausgebildet.

Die Figur 4A zeigt die Messeinrichtung 44 in einer perspektivischen Seitenansicht, die verdeutlicht, dass das Sensorgehäuse 46 in einer seitlichen Umfangsrichtung im Wesentlichen rund ausgestaltet ist. Die Platine 50 und die Batterie 54 sind übereinander angeordnet.

Es versteht sich, dass die vorliegende Erfindung nicht auf die genannte bevorzugte räumliche Anordnung der Komponenten im Sensorgehäuse 46 eingeschränkt ist. So können die Platine 50 und die Batterie 54 auch nebeneinander angeordnet sein und/oder das Sensorgehäuse 46 in Umfangsrichtung im Wesentlichen rechteckig sein.

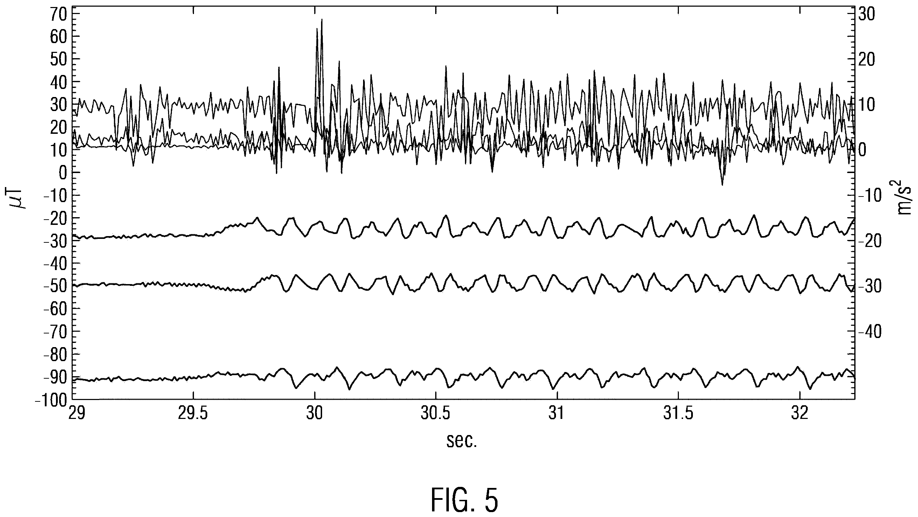

Fig. 5 zeigt eine Abbildung mit mehreren Graphen, die eine Beschleunigung (in m/s²) und eine Magnetfeldstärke (in µT) angeben, die von der Messeinrichtung über die Zeit (in s) an einer landwirtschaftlichen Gelenkwelle im Zustand einer von der Gelenkwelle angetriebenen Arbeitsmaschine gemessen wurden. Anhand der Extrema der Graphen wertet der Prozessor die Messdaten aus.

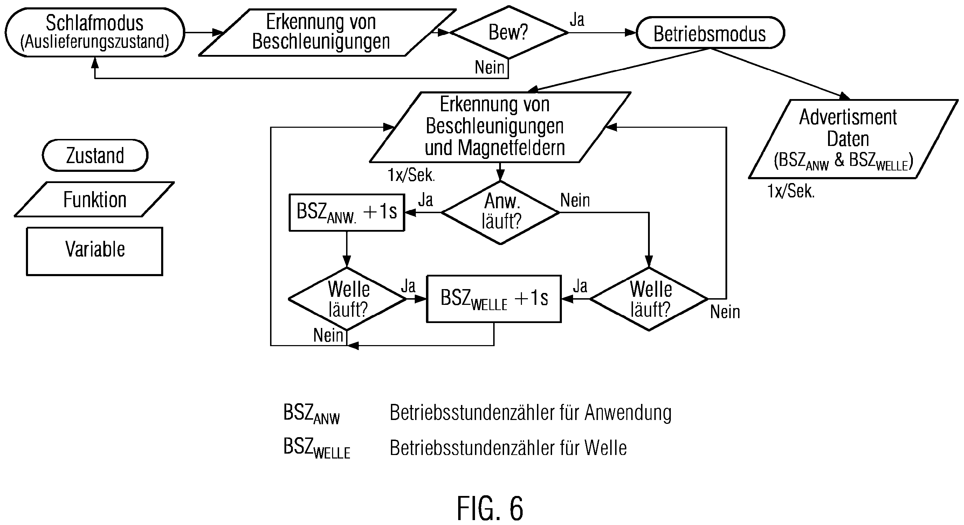

Fig. 6 verdeutlicht in einem Schaubild den Verfahrensablauf zur Erkennung eines Betriebs einer landwirtschaftlichen Gelenkwelle und einer von der Gelenkwelle angetriebenen Arbeitsmaschine. Zur einfacheren Darstellung ist die landwirtschaftliche Gelenkwelle in dem Schaubild als "Welle" und die Arbeitsmaschine als "Anwendung" bezeichnet. Die Messeinrichtung wird ersichtlich im Schlafmodus ausgeliefert. Wird im Schlafmodus eine einen Schwellenwert übersteigende Beschleunigung durch den Beschleunigungssensor registriert, versetzt sich die Messeinrichtung in den Betriebsmodus.
Im Betriebsmodus sind mindestens der Beschleunigungssensor und der Magnetfeldsensor in aktiviertem Zustand und der Prozessor wertet die Messsignale der Sensoren kontinuierlich, beispielsweise in einem Zeitinkrement von einer Sekunde, aus. Entsprechend der Auswertung, ob die Welle oder die Anwendung in Betrieb sind, werden ein Betriebsstundenzähler für die Anwendung und ein Betriebsstundenzähler für die Welle hochgesetzt. Die Zählerstände können gleichzeitig (siehe "Advertisment Daten") oder zeitversetzt an einen Empfänger gesendet werden, der beispielsweise ein mobiles Endgerät und/oder im Zugfahrzeug vorgesehen sein kann.

### Bezugszeichenliste

- 1: landwirtschaftliche Gelenkwelle
- 2: erstes Gelenk
- 3: zweites Gelenk
- 4: Wellenkörper
- 5: Innenrohr
- 6: Außenrohr
- 7: Schutzrohr
- 8,9: Schutztrichter
- 10: äußeres Schutzrohr
- 11: inneres Schutzrohr
- 12: Kette
- 13, 14: Zapfenkreuz
- 15, 16: Gabel
- 44: Messeinrichtung
- 46: Sensorgehäuse
- 48: Magnetfeldsensor
- 50: Platine
- 52: Prozessor
- 54: Batterie
- 58: Vorsprung
- 60: Positionierungszapfen
- 62: Bohrung
- 63: Beschleunigungssensor
- 64: Innenfläche
- 66: Außenfläche
- 68: Schraublasche
- 70: seitlicher gerader Flächenabschnitt der Innenfläche
- 72: gekrümmter Flächenabschnitt der Innenfläche
- 74: seitlicher gerader Flächenabschnitt der Innenfläche
- 76: mittiger gerader Flächenabschnitt der Innenfläche

## Patentansprüche

1. Messeinrichtung (44) mit einem Magnetfeldsensor (48) zur Erfassung von zumindest einem Betriebsparameter einer landwirtschaftlichen Gelenkwelle (1) zur Drehmomentvermittlung zwischen einer Zapfwelle eines Zugfahrzeuges und einem Getriebe eines landwirtschaftlichen Geräts, die zumindest ein Zapfenkreuz (13, 14), an dessen gegenüberliegende Zapfen ein Wellenkörper (4) angeschlossen ist, und ein den Wellenkörper (4) drehbar in sich aufnehmendes Schutzrohr (7) aufweist, **dadurch gekennzeichnet, dass** der Magnetfeldsensor (48) zur Messung eines von dem bloßen Wellenkörper (4) der Gelenkwelle (1) ausgehenden Magnetfelds angepasst ausgebildet ist.

2. Messeinrichtung (44) nach Anspruch 1, **gekennzeichnet durch** ein geschlossenes Sensorgehäuse (46), vorzugsweise aus Kunststoff, das den Magnetfeldsensor (48) und eine Energiequelle (54) für den Magnetfeldsensor (48) in sich aufnimmt und zur drehfesten Befestigung an einer Außen- oder einer Innenseite des Schutzrohrs (7) angepasst ausgebildet ist.

3. Messeinrichtung (44) nach Anspruch 2, **dadurch gekennzeichnet, dass** das Sensorgehäuse (46) eine an das Schutzrohr (7) anlegbare konkave Innenfläche (64) aufweist, die aus gekrümmten und/oder geraden Flächenabschnitten (70, 72) gebildet ist.

4. Messeinrichtung (44) nach Anspruch 3, **dadurch gekennzeichnet, dass** das Sensorgehäuse (46) gegenüberliegend zu der Innenfläche (64) eine konvexe Außenfläche (66) aufweist, die aus gekrümmten und/oder geraden Flächenabschnitten (74, 76) gebildet ist.

5. Messeinrichtung (44) nach einem der Ansprüche 2 bis 4, **dadurch gekennzeichnet, dass** das Sensorgehäuse (46) auf einer eine Anlagefläche zur Anlage an das Schutzrohr (7) ausbildenden Seite mit einem Positionierungszapfen (60) versehen ist, der in eine Bohrung (62) des Schutzrohrs (7) eingreift.

6. Messeinrichtung (44) nach einem der Ansprüche 2 bis 5, **gekennzeichnet durch** mindestens einen weiteren in dem Sensorgehäuse (46) vorgesehenen Sensor, insbesondere zumindest einen Beschleunigungssensor (63) und/oder einen Temperatursensor.

7. Messeinrichtung (44) nach einem der Ansprüche 2 bis 6, **gekennzeichnet durch** einen in dem Sensorgehäuse (46) vorgesehenen Prozessor (52), der ein Sensorsignal einer oder mehrerer der Sensoren zur Ermittlung von zumindest einem Betriebsparameter der Gelenkwelle (1), insbesondere der Drehzahl, verarbeitet.

8. Messeinrichtung (44) nach Anspruch 7, **gekennzeichnet durch** einen Betriebsstundenzähler für die Gelenkwelle (1), der in Abhängigkeit von dem zumindest einen Betriebsparameter hochgesetzt wird.

9. Messeinrichtung (44) nach Anspruch 7 oder 8, **dadurch gekennzeichnet, dass** der Prozessor (52) das Sensorsignal zur Erfassung einer Bewegung einer mit der Gelenkwelle (1) verbindbaren Arbeitsmaschine auswertet und einen Betriebsstundenzähler für die Arbeitsmaschine in Abhängigkeit einer Dauer der erfassten Bewegung hochsetzt.

10. Messeinrichtung (44) nach einem der Ansprüche 7 bis 9, **gekennzeichnet durch** eine in dem Sensorgehäuse (46) vorgesehene und datenmäßig mit dem Prozessor (52) verbundene Sendeeinrichtung, die den oder die ermittelten Betriebsparameter und/oder einen Zählerstand des Betriebsstundenzählers drahtlos an einen zur Datenverarbeitung angepassten Empfänger sendet.

11. Messeinrichtung (44) nach Anspruch 8 oder 9, **gekennzeichnet durch** ein Mittel zur Ausgabe eines Warn- oder Wartungssignals, das durch Erreichen eines vorbestimmten Zählerstandes des Betriebsstundenzählers ausgelöst wird.

12. Messeinrichtung (44) nach einem der Ansprüche 7 bis 11, **gekennzeichnet durch** einen Stand-by-Modus und einen Betriebsmodus, die als Steuerungslogik auf dem Prozessor (52) implementiert sind, wobei der Prozessor (52) so eingerichtet ist, dass in Reaktion auf ein Sensorsignal eines der Sensoren von dem Stand-by-Modus in den Betriebsmodus geschaltet wird.

13. Landwirtschaftliche Gelenkwelle (1) zur Drehmomentvermittlung zwischen einer Zapfwelle eines Zugfahrzeuges und einem Getriebe eines landwirtschaftlichen Geräts, mit zumindest einem Zapfenkreuz (13, 14), an dessen gegenüberliegende Zapfen ein Wellenkörper (4) angeschlossen ist, und mit einem den Wellenkörper (4) drehbar in sich aufnehmenden Schutzrohr (7), **gekennzeichnet durch** eine drehfest an dem Schutzrohr (7) befestigte Messeinrichtung (44) nach einem der vorherigen Ansprüche.

14. Landwirtschaftliche Gelenkwelle (1) nach Anspruch 13, **dadurch gekennzeichnet, dass** das Sensorgehäuse (46) derart dimensioniert ist und/oder so an dem Schutzrohr (7) befestigt ist, dass ein Schutztrichter (8, 9) für das Zapfenkreuz (13, 14) über das Sensorgehäuse (46) hinweg auf das Schutzrohr (7) gestülpt werden kann.

15. Verfahren zur Erkennung eines Betriebs und/oder einer Betriebsdrehzahl einer landwirtschaftlichen Gelenkwelle (1) durch Messung einer Magnetfeldänderung eines Magnetfelds, das von einem bloßen Wellenkörper (4) der Gelenkwelle ausgeht.

16. Verfahren zur Erkennung eines Betriebs einer an ein Nutzfahrzeug angekoppelten und durch eine landwirtschaftliche Gelenkwelle (1) nach Anspruch 13 oder 14 mit dem Nutzfahrzeug verbundene Arbeitsmaschine durch Auswerten eines Sensorsignals der Messeinrichtung (44).
